# EUROPEAN PATENT APPLICATION

(11) **EP 3 085 639 A1**
(43) Date of publication of application: **26.10.2016**
(21) Application number: 15164292.3
(22) Date of filing: 20.04.2015
(51) Int. Cl.: B65D 85/10

(54) **PACKAGE OF TOBACCO-RELATED ARTICLES**

(71) Applicant: Imperial Tobacco Limited, Bristol BS3 2LL (GB)
(72) Inventor: Hibbert, Olivia, 22761 Hamburg (DE); Malan, Charl, Bristol BS3 2LL (GB)
(74) Representative: Uexküll & Stolberg

(57) **Abstract**

A package of tobacco-related articles comprises a sealed enclosure (2) comprising flexible barrier sheet material wrapping a charge of tobacco-related articles (30) and forming a front wall (4), a rear wall, two lateral walls (6), a top wall (8) and a bottom wall. The front wall (4) has a larger area than the top wall (8). An access opening (12) extending over part of the top wall (8) and part of the front wall (4) is covered by a re-sealable flap (20) which is foldable about a hinge line to permit access to the interior of the enclosure (2). The package further comprises an outer shell (102), but not an inner shell the enclosure is inserted into. In a closing position, the enclosure (2) is at least partially surrounded by the outer shell (102) so that the outer shell (102) at least partially covers the access opening (12). The enclosure (2) is slidably moveable with respect to the outer shell (102) from the closing position to an access position, in which the re-sealable flap (20) is accessable to be folded for permitting access to the interior of the enclosure (2).

## Description

The invention relates to a package of tobacco-related articles.

WO 98/22368 A discloses a pack or package comprising a frame (including a major panel, two side wings, and an end flap) and a sealed enclosure made of flexible barrier sheet material, which wraps a smoking-article charge and the frame. The sealed seams of the enclosure at least partially overlay the frame. The enclosure can have a re-sealable access aperture.

A similar pack is known from WO 98/22367 A. In this case, an access aperture in the sealed enclosure extends from a top side to a major side of the enclosure and can be closed by a re-sealable adhesive cover, which is foldable about a hinge line at an edge of the top side (remote from said major side) to permit access to the interior of the package. Parts of the frame provide a counter-pressure when the cover is re-sealed. The pack can be inserted in an additional rigid outer pack.

WO 00/01594 A discloses a lamella (tacky or adhesive label) for application to the barrier sheet material in the area of the access opening of the sealed enclosure of a pack similar to the packs explained before. In this way, a re-sealable flap having adhesive edges is formed, which is foldable about a hinge line located at an edge of the top side of the pack (remote from the major side). The label comprises two layers (plus adhesive), wherein the inner layer includes a major portion and a non-adhesive minor portion separated from the major portion by a cut through the inner layer. The minor portion serves as a gripping tab, wherein the cut has the effect that the gripping tab somewhat lifts from the barrier sheet material underneath the gripping tab, which facilitates the handling of the tab. The manufacture of the lamella involves some expenditure, however.

WO 2011/060930 A describes a package for tobacco-related articles comprising an outer shell, a lid, and an inner shell which accommodates the tobacco-related articles and can be slid upwardly with respect to the outer shell. When the inner shell is moved upwardly, the lid opens automatically. In this package, however, the tobacco-related articles are not kept fresh by a sealed or re-sealable enclosure.

The object of the invention is to improve such slide shell packs, in particular in terms of manufacturing, an easy handling and the freshness of the tobacco-related articles contained therein.

This object is achieved by the package of tobacco-related articles defined in claim 1. Advantageous versions of the invention follow from the dependent claims.

The package of tobacco-related articles according to the invention comprises a sealed enclosure comprising flexible barrier sheet material, which wraps a charge of tobacco-related articles and forms a front wall, a rear wall, two lateral walls, a top wall and a bottom wall. The lateral walls may be flat, but other designs (e.g. roundish or with bevelled edge zones) are possible as well. Moreover, the term "wall" is not to imply that these walls are rigid. Using this terminology (and irrespective of the actual orientation of the package), the front wall has a larger area than the top wall. An access opening extends over at least part of the top wall and at least part of the front wall and is covered by a re-sealable flap which is foldable about a hinge line to permit access to the interior of the enclosure. Moreover, the package comprises an outer shell which, in a closing position, at least partially surrounds the enclosure. In this design, the enclosure is not accommodated in an inner shell, which in turn fits into the outer shell, but the enclosure is directly surrounded (or at least partially surrounded) by the outer shell so that the outer shell at least partially covers the access opening. The enclosure is slidably moveable with respect to the outer shell from the closing position to an access position, in which the re-sealable flap is accessable to be folded for permitting access to the interior of the enclosure.

Thus, the package according to the invention is designed as a slide shell pack, in which the sealed and re-sealable enclosure takes the function of an inner shell which is slidably mounted with respect to the outer shell. Additionally, the enclosure is able to keep fresh the tobacco-related articles. A separate inner shell is not required and not provided, which reduces the overall consumption of materials and facilitates the manufacture of the package. In the access position, the re-sealable flap can be conveniently opened and closed.

The hinge line of the flap may be located at the front wall of the enclosure. In other embodiments, it may be located at the top wall of the enclosure. Generally, the optimal position of the hinge line of the flap depends on the designs of the outer shell and the enclosure and on the way how the enclosure fits into the outer shell and is exposed in the access position.

Similarly, the size of the access opening and, correspondingly, the length of the flap may vary, depending on the overall construction. To be more precise, a length of the front wall of the enclosure can be defined as the distance extending from a lower edge to an upper edge, wherein the bottom wall of the enclosure is connected to the lower edge and the top wall of the enclosure is connected to the upper edge. In a short-flap design, the access opening has an extension on the front wall of the enclosure, starting from the upper edge and measured towards the lower edge, of e.g. at most 40% of the length of the front wall or at most 30% of the length of the front wall. In a long-flap design, the corresponding extension of the access opening is, e.g., at least 65%, 70%, 75% or 80% of the length of the front wall. Any intermediate values for the extension of the access opening on the front wall of the enclosure are possible as well, however.

To get access to the interior of the package, the user slides the enclosure relative to the outer shell so that the re-sealable flap is exposed or partially exposed, lifts the flap at the end opposite to its hinge line and pulls it in a direction towards the hinge line. The handling of the flap will be generally facilitated if the end of the flap opposite to its hinge line, i.e. the end where the flap is grasped and lifted from the enclosure, is presented at a position where it is at hand. The flap preferably comprises a gripping tab located in an area remote from the hinge line of the flap. The gripping tab facilitates the grasping of the flap.

In advantageous embodiments of the invention, the flap comprises a layer which includes barrier sheet material cut from the barrier sheet material forming the front wall and the top wall of the enclosure. This layer of the flap is covered by a label having adhesive edge zones extending beyond the cut edges of said layer and being adapted to seal the flap when the access opening is covered. In an area opposite to the hinge line of the flap and beyond said barrier sheet material layer of the flap, the label can be folded back about a fold line, thus forming a gripping tab. For sealing purposes, there can be an adhesive zone between the fold line of the gripping tab and the cut edge of the barrier sheet material layer of the flap close to this fold line. Preferably, the gripping tab is non-adhesive. The label can be provided with a bottom side which is completely covered with an adhesive, which forms the adhesive edge zones of the label and permits the label to be glued to the barrier sheet material layer of the flap in an easy manner. In the area of the gripping tab, the adhesive can be removed or neutralised or covered by, e.g., paper or some film material.

In these embodiments, the fold line defining the gripping tab can be a fold line at which the gripping tab is folded back by about 180°. Since the gripping tab will not stay in such a strongly folded state but will lift somewhat, it can be easily grasped in order to open the flap. To this end, a particular treatment of the label in the area of the fold line is generally not required so that the label can be manufactured at relatively low cost.

The portion of the label extending at the front wall of the enclosure may have a large length, even if it is not required to cover a large access opening, e.g. a length of at least 60%, at least 55%, at least 70%, at least 75% or at least 80% of the length of the front wall, wherein the length of the front wall is measured between the edges where the bottom wall and the top wall of the enclosure are connected to the front wall. A large label may be used as a striking marker or as a carrier for information. Since the label can be produced and, e.g., printed with information in a process independent of the preparation of the barrier sheet material, the overall manufacturing process gets more flexible.

Generally, the label can be designed in multiple ways. For example, the label may be blank, it may be printed with decorative elements and/or information, it may be coloured or non-coloured, it may comprise straight or non-straight edges, etc. Moreover, the label may be provided with punched holes or punched graphical elements. The latter will not deteriorate the sealing effect of the enclosure if such holes or punched elements overlay barrier sheet material of the enclosure after the label has been placed. Any combinations of different design elements of the label are conceivable as well.

To stabilize the package, an inner frame can be provided between the charge of tobacco-related articles and the enclosure. The inner frame, e.g. made of cardboard, has a shape so that it does not obstruct the area of the access opening. Generally, it is not required that the inner frame encompasses the tobacco-related articles completely because the barrier sheet material has already some stiffness and the tobacco-related articles also contribute to stabilisation. Examples for an inner frame are well known in the art, e.g. from WO 98/22368 A or from WO 98/22367 A. Embodiments which do not use an inner frame are conceivable as well.

In advantageous embodiments of the invention, the package, in addition to the outer shell and the sealed and re-sealable enclosure, further comprises a lid and a connector engaging the lid. The outer shell includes a front wall, a rear wall, two lateral walls opposite to each other connecting the front wall and the rear wall, as well as a top side, wherein the lid is adapted to close the top side of the outer shell when in a closed state. The lid is swivelably connected to the rear wall of the outer shell at a hinge line and is swivelable about that hinge line for transfer from the closed state to an opened state. The enclosure is slidably mounted in the outer shell and is moveable from a retracted position to an advanced position, which enables access to the flap, the access opening and the tobacco-related articles. A cutout is provided in at least one wall of the outer shell, selected out of the front wall, the rear wall or the two lateral walls, so that part of the enclosure is exposed for transmitting a force onto the enclosure (e.g. by means of a user's thumb) for moving the enclosure. The connector is arranged between a part at the enclosure and the lid and engages the lid at a distance from the hinge line of the lid smaller than the dimension of the lid in a direction perpendicular to the hinge line of the lid. When the enclosure is moved into its advanced position, the connector pushes the lid into its opened state. And when the enclosure is moved into its retracted position, the connector pulls the lid into its closed state.

The general concept of the mechanism of this package is described in WO 2011/060930 A, the disclosure of which is incorporated by reference. According to the invention, however, the inner shell of the package disclosed in WO 2011/060930 A is replaced by the sealed and re-sealable enclosure. In particularly advantageous embodiments, the hinge line of the flap is located at the front wall of the enclosure and a gripping tab in the area of the top wall of the enclosure is folded backwards, as explained further above. In this case, the gripping tab is readily at hand after the enclosure has been moved to its advanced position and the lid has opened. It is also possible that the flap is oriented in the opposite direction, with its hinge line being located at the top wall of the enclosure, in particular in short-flap designs.

The lid of that package may comprise a top wall having a front edge, a rear edge, two lateral edges and a bottom side, wherein the top wall is adapted to close the top side of the outer shell when the lid is in its closed state, the hinge line of the lid being located at the rear edge of the top wall. The connector extends from an upper area at the rear wall of the enclosure, where it has a first hinge line, and has a second hinge line at the bottom side of the top wall of the lid. In such a design, the lid has a pleasant appearance and its opening mechanism works well, in particular when some geometrical conditions are observed. To this end, in the closed state of the lid, the ratio of the distance between the first hinge line of the connector and the hinge line of the lid to the distance between the hinge line of the lid and the second hinge line of the connector can be in the range of from 0.5 to 1.0.

Generally, it is possible that the connector, in the area of its first hinge line, is directly attached to the rear wall of the enclosure. Alternatively, the connector may emerge from a reinforcement element arranged at the outer face of the rear wall of the enclosure, which provides for some stabilising effect.

If the material of the flap is relatively stiff, the flap may tend to close by itself after it has been opened to get access to the contents of the package. To avoid this self-closing effect, the flap can comprise, e.g. in a region remote from the hinge line of the flap, a self-sticking area comprising a sticking means facing outwardly. The self-sticking area can be used to stick or adhere the flap, in the opened state when the flap is bent or folded backwards, e.g. to a wall of the enclosure or to a wall of the outer shell, respectively. To close the flap again, it is easy to pull off the self-sticking area from its counterface. The sticking means of the self-sticking area can be provided in various ways, e.g. with a pressure-sensitive adhesive (which preferentially sticks better to itself and to the material of the flap than to the material of the enclosure or outer shell, respectively, to avoid adhesive remainders at the wrong face), or with suction devices, etc.

In the following, the invention is further described by means of embodiments. The drawings show in
- Figure 1: three-dimensional views of an embodiment of a sealed (and re-sealable) enclosure as used in the package according to the invention, i.e. in part (a) from the front side, a re-sealable flap being closed, in part (b) from the rear side, the flap being closed, and in part (c) from the front side, the flap being open,
- Figure 2: blanks for an embodiment of an enclosure similar to that of Figure 1, i.e. in part (a) a blank of its main part and in part (b) a blank of an adhesive label forming part of the re-sealable flap,
- Figure 3: a three-dimensional view of another embodiment of an enclosure from the front side, wherein the re-sealable flap is longer than in the embodiment of Figure 1,
- Figure 4: three-dimensional views of further embodiments of an enclosure from the front side, wherein the respective re-sealable flap is oriented in the opposite direction compared to Figures 1 and 3, i.e. in part (a) with a long flap, in part (b) with a medium-size flap, and in part (c) with a short flap,
- Figure 5: three-dimensional views of an embodiment of the package according to the invention, wherein an enclosure formed from the blanks according to Figure 2 is slidably mounted in an outer shell, i.e. in part (a) from the front side with a lid being closed, in part (b) from the front side with the lid being open and the enclosure being in an advanced position, in part (c) from the front side after the re-sealable flap has been opened, and in part (d) from the rear side after the re-sealable flap has been opened,
- Figure 6: a longitudinal section through the embodiment of Figure 5 in the state shown in Figure 5(b),
- Figure 7: a plan view of a blank of the outer shell including the lid in the embodiment of Figure 5, and
- Figure 8: a plan view of a blank of an inner frame, as used for strengthening the enclosure in the embodiment of Figure 5.

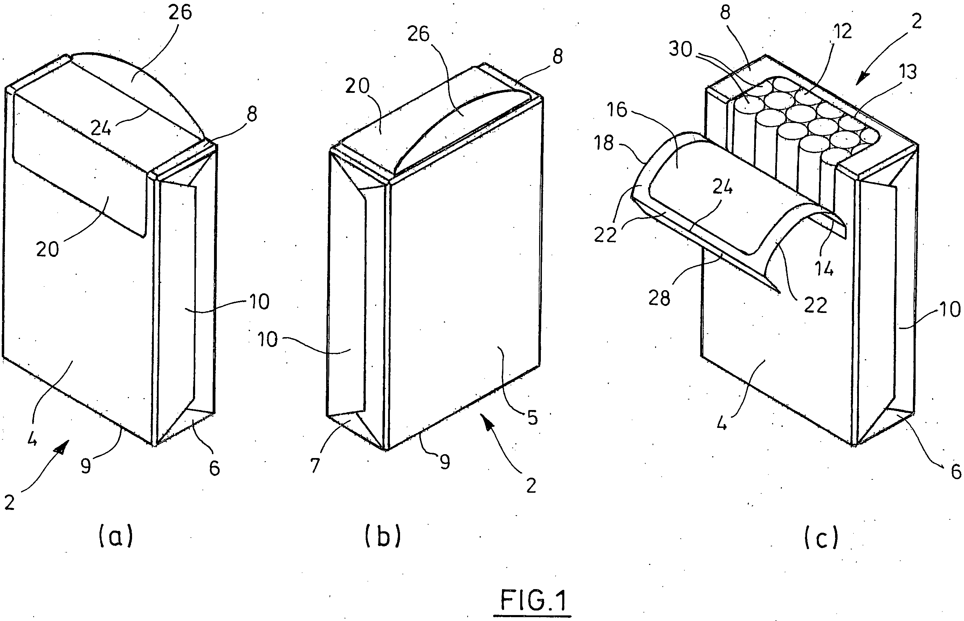

Figure 1 illustrates an embodiment of a sealed (and re-sealable) enclosure 2, which forms part of a package of tobacco-related articles, in three three-dimensional views, i.e. Figure 1(a), Figure 1(b) and Figure 1(c).

The enclosure 2 is made of flexible barrier sheet material. Such barrier sheet material is well-known in the art. When sealed, it keeps the moisture and the aromas of the tobacco-related articles contained therein. In the embodiment, the flexible barrier sheet material is arranged as a wrapping about a charge of cigarettes. This wrapping forms a front wall 4 (see Figure 1(a)), a rear wall 5 (see Figure 1(b)), two lateral walls 6 and 7, a top wall 8 and a bottom wall 9 (which is not directly visible in the figures). In this context, the term "wall" is used instead of "side", which does not have a special meaning, however, and does not imply any properties with respect to rigidity. The designation of the walls refers to an upright position of the enclosure 2, corresponding to practical use and as shown in the figures, but does not include further implications. In any case, the front wall 4 has a larger area than the top wall 8. The enclosure 2 is sealed, e.g. by means of heat-sealing, gluing, and/or friction or by other means known in the art, at seams 10. Two of these seams 10 are visible in Figure 1(a) and Figure 1(b).

As shown in Figure 1(c), an access opening 12 permits access to the interior of the enclosure 2. The access opening 12 extends over part of the top wall 8 and part of the front wall 4 and can be covered by a re-sealable flap.

In the embodiment, the access opening 12 is defined by a cut-line 13 made as a straight cut through the material of the enclosure 2 along three sides of the access opening 12, whereas the forth side of the access opening 12 is defined by a hinge line 14. In this way, a layer 16 of barrier sheet material is partially cut out from the enclosure 2. To the outside of this layer 16, a flexible, adhesive label 18 is glued by means of an adhesive covering most of the area of the inner face of the label 18. In this way, the flap (designated by 20) is formed.

The area of the label 18 is greater than that of the layer 16 so that adhesive edge zones 22 are provided (see Figure 1(c)). At a fold line 24, the label 18 is sharply bent backwards in order to form a gripping tab 26. The inner face 28 of the gripping tab 26 is not adhesive, which can be achieved, e.g., by removing the adhesive of the label 18 in this area or by covering it with a film material. A zone between the fold line 24 and the cut edge of the layer 16 is adhesive, however.

Figure 1(c) shows the enclosure 2 in a state when the flap 20 has been folded back to open the access opening 12. The contents of the enclosure 2, i.e. cigarettes 30, can be conveniently removed. The flap 20 deflects from the enclosure 2 along the hinge line 14. The hinge line 14 does not have to be a precise line, but it roughly describes where the flap 20 starts to deflect from the enclosure 2.

When the flap 20 is closed, the adhesive in the edge zones 22 and the zone adjacent to the fold line 24 seals the enclosure 2. The flap 20 can be easily opened by pulling at the gripping tab 26 and deflecting the flap 20 to the position shown in Figure 1(c).

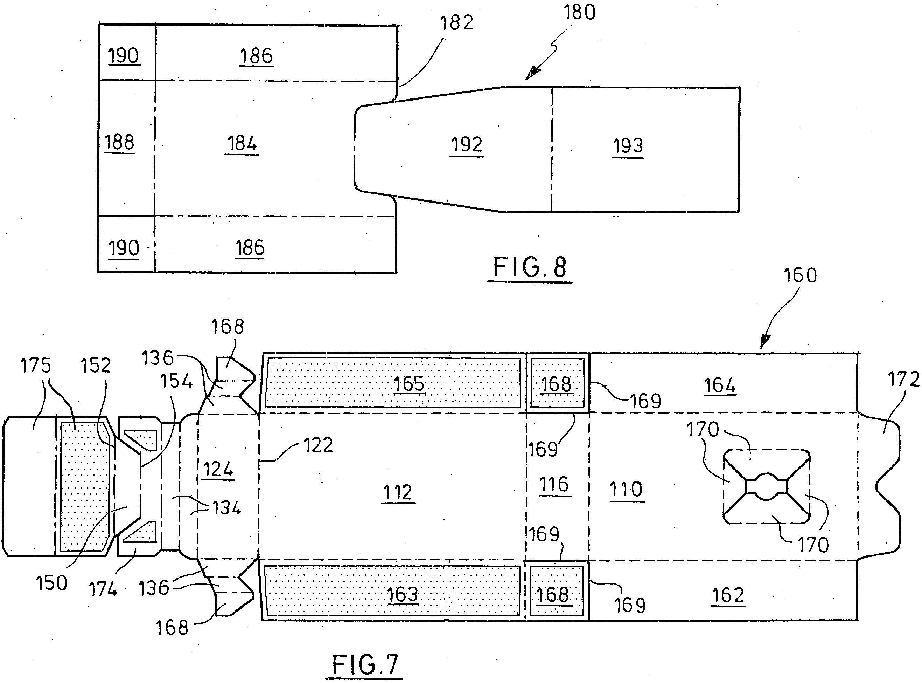

Moreover, an inner frame made of cardboard may be arranged between the cigarettes 30 and the inner face of the enclosure 2. The inner frame partially surrounds the bundle of cigarettes 30 to provide some rigidity to the enclosure 2, in particular after part of the cigarettes 30 has been taken out of the enclosure 2. In Figure 1(c), the inner frame is not visible because it is not present in the area of the access opening 12. Figure 8 shows a cardboard blank for an inner frame of a slightly different embodiment of an enclosure, see below.

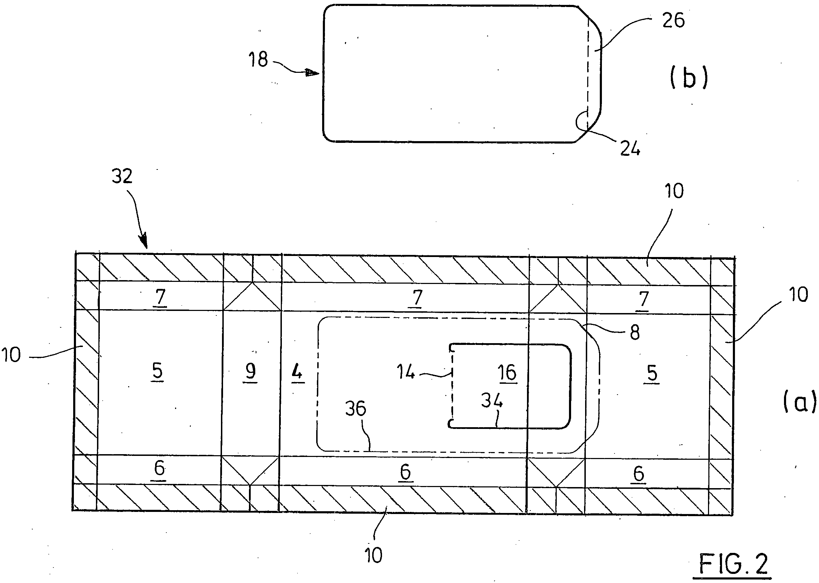

Blanks for an embodiment of an enclosure very similar to the enclosure 2 according to Figure 1 are shown in Figure 2. Because of the similarity, in Figures 1 and 2 the same reference numerals are used for parts or areas corresponding to each other. The differences mainly relate to the shape of the access opening 12 and the label 18.

Figure 2(a) displays the blank for the main part of the enclosure 2, designated by 32. The blank 32 is a rectangular piece of barrier sheet material, in which the access opening 12 is partially cut out by a cut line 34 to form the layer 16 of the flap 20, see above. The other lines in Figure 2(a) are the periphery of blank 32 or they indicate fold lines or seam areas (hatched). The function of the individual regions of blank 32 becomes evident from the reference numerals. The fold lines may be pre-treated, e.g. by pressing, to facilitate the folding process.

The label 18 is shown in Figure 2 (b) . It is made as an adhesive label from a different material. In the area of the gripping tab 26, the adhesive is removed. The label 18 in Figure 2(b) is significantly longer (measured in a direction from the bottom wall 9 to the top wall 8) than the label in Figure 1, although the access opening 12 has about the same size in both cases. An advantage of the large area of the label 18 in Figure 2(b) is the possibility of using this area as an information carrier or marker, which can be prepared in a process independent of the manufacture of the blank 32. In Figure 2(a), the position of the label 18 is indicated by the dot-dashed line 36.

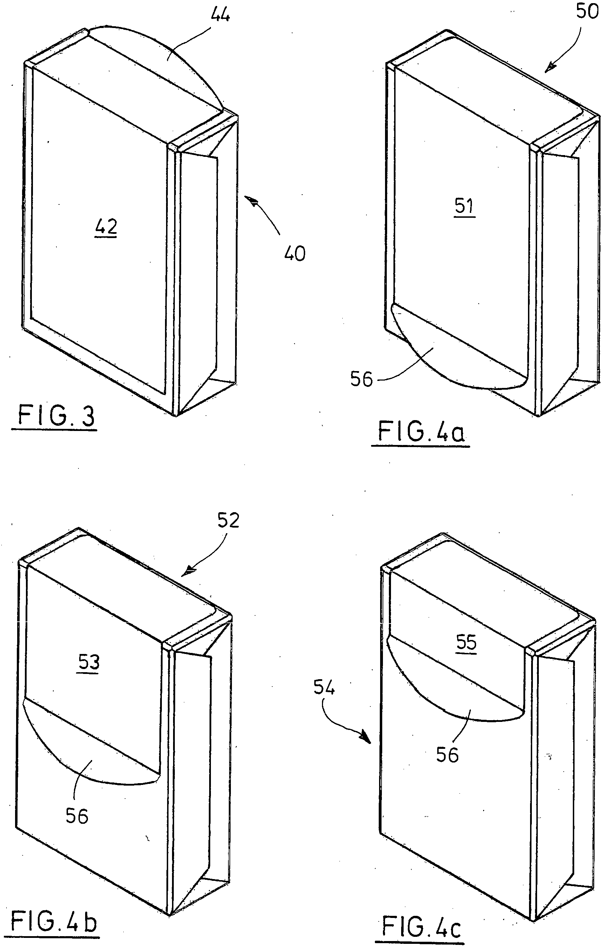

Figure 3 shows another embodiment of an enclosure, designated by 40, in which a long label 42 is used. The label 42 is even longer than the label according to Figure 2. The label 42 may cover a large access opening, which is only slightly smaller than the label 42, but it may also cover a significantly smaller access aperture, like in the embodiment according to Figure 2. The flap comprising the label 42 is opened by pulling at a tab 44 provided at the top side of the enclosure 40, as in the embodiments according to Figures 1 and 2.

In other embodiments, the re-sealable flap of the enclosure is arranged in the opposite direction, the hinge line of the flap being located at the top wall of the enclosure. Figure 4 shows examples in three-dimensional views, i.e. in Figure 4(a) an enclosure 50 comprising a long label 51, in Figure 4(b) an enclosure 52 comprising a medium-sized label 53, and in Figure 4(c) an enclosure 54 comprising a short label 55. In all cases, a gripping tab is designated by 56. When pulling at the gripping tab 56, the corresponding re-sealable flap is opened to provide access to the interior of the respective enclosure. In the embodiment according to Figure 4(a), it will be advantageous if the access opening is relatively large as well, because otherwise the user has to pull the tab 56 against adhesive forces caused by a large area of adhesive. If nevertheless the access opening is relatively small, part of the adhesive of the label 51 might be removed or neutralised, e.g. by covering with a piece of film.

The enclosure described so far in several embodiments forms part of a package of tobacco-related articles, which additionally comprises an outer shell. Generally, the enclosure is slidably mounted in the outer shell. In a closing position, the outer shell at least partially surrounds the enclosure so that the outer shell at least partially covers the access opening. When the enclosure is slidably moved with respect to the outer shell from the closing position to an access position, the re-sealable flap becomes accessable and can be opened.

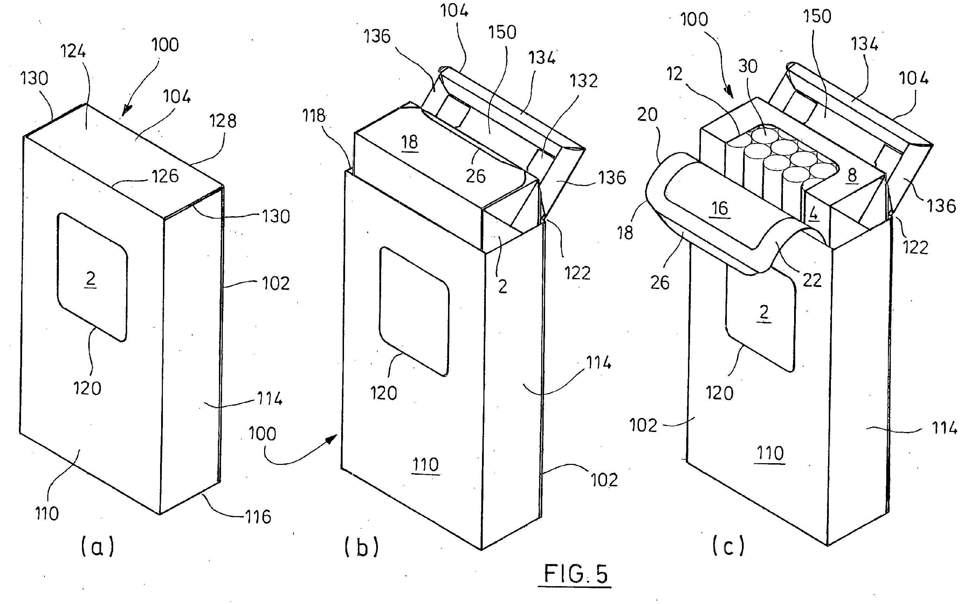

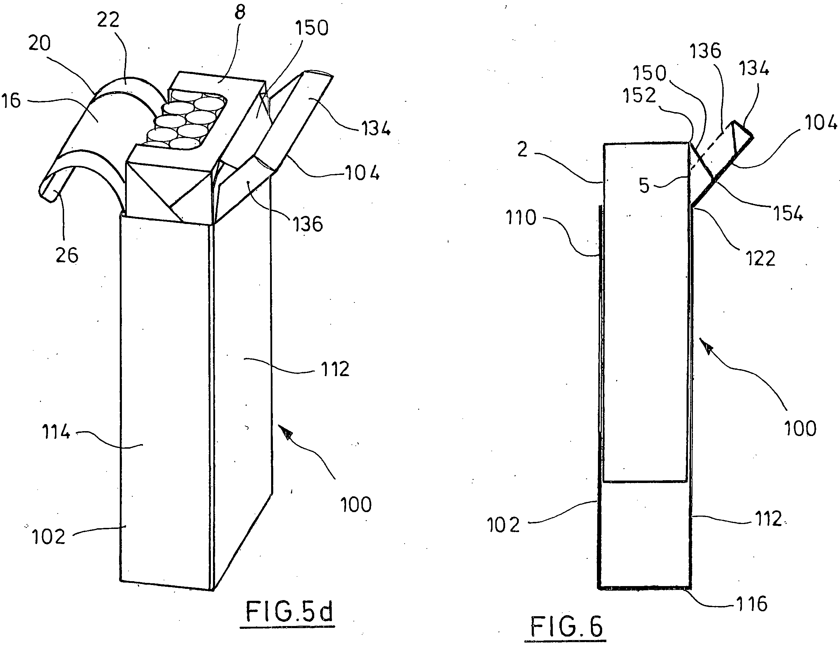

Figure 5 illustrates an embodiment of such a package, designated by reference numeral 100, in several states and from different directions, respectively, in three-dimensional views.

The package 100 comprises an outer shell 102, a lid 104 adapted to close the outer shell 102, and an enclosure 2, which is movable within the outer shell 102 from a retracted position (closing position), see Figure 5(a), to an advanced position (access position), see Figures 5(b), 5(c), and 5(d). In the embodiment, the enclosure 2 is very similar to the re-sealable enclosure according to Figure 1. To be more precise, the enclosure 2 of the package 100 is made from the blanks shown in Figures 2(a) and 2(b). For these reasons, the same reference numerals are used as in Figures 1 and 2.

The enclosure 2 accommodates a bundle of tobacco-related articles, e.g. a bundle of cigarettes 30. In the advanced position of the enclosure 2 as shown in Figure 5(b), the tab 26 can be readily gripped in order to open the flap 20 and to take out a cigarette 30, see Figures 1(c) and 1(d).

The lid 104 opens and closes automatically, when the enclosure 2 is moved upwardly to the advanced position and downwardly to the retracted position, respectively, by means of a coupling mechanism explained further below in detail.

The outer shell 102 comprises a front wall 110, a rear wall 112, two lateral walls 114 and a bottom wall 116. In the embodiment, the top side 118 provides a free cross-sectional area. The front wall 110 includes a cutout 120, i.e. an aperture fully penetrating the front wall 110. In the embodiment, the cutout 120 is located approximately in the centre area of the front wall 110.

The lid 104 is connected to the upper edge of the rear wall 112 via a hinge line 122 so that it can be swivelled from a closed state, see Figure 5(a), to a fully opened state, see Figure 5(b), Figure 5(c), and Figure 5(d). In the embodiment, the lid 104 comprises a top wall 124 having a front edge 126 and a rear edge 128, as well as two lateral edges 130. Its bottom side is designated by reference numeral 132. The hinge line 122 runs along the rear edge 128 of lid 104 and is designed from a fold line of the blank the outer shell is formed from.

Moreover, the lid 104 comprises a front edge wall 134 extending from front edge 126 and two lateral edge walls 136 extending from the two lateral edges 130 of the top wall 124 of lid 104. As can be seen in Figures 5(b), (c), (d), the edge walls 134 and 136 have a "bevelled" shape. That means, they extend from the front edge 126 and the lateral edges 130, respectively, in a somewhat inwardly inclined manner such that the edge walls 134 and 136 can enter the interior space of the outer shell 102 when the lid 104 is closed. Consequently, the edge walls 134 and 136 are not visible when the lid 104 is closed, see Figure 5(a). In other words, when the lid 104 is closed, only its top wall 124 can be seen, which imparts to the package 100 a striking design.

When the lid 104 is closed, the edge walls 134 and 136 are located inside the outer shell 102 and stabilise the package 100. In the embodiment, the edge walls 134 and 136 have a triangular cross-sectional shape, see Figure 6, which provides for a generally large strength of the edge walls 134 and 136. Moreover, the bevelled or inclined shape of the edge walls 134, 136 facilitates the closing process of the lid 104. In variants of the embodiment according to Figure 5, the cross-sectional shape of the edge walls is not triangular, but different, e.g. more or less rounded.

The enclosure 2 is coupled to the lid 104 by means of a connector 150. As shown in Figure 5(b), the connector 150 extends over a major portion of the width of package 100. Figure 6 illustrates how the connector 150 works.

In the embodiment, the connector 150 extends from the upper edge of the rear wall 5 of the enclosure 2 at a first hinge line 152. The connector 150 is attached to the bottom side 132 of the top wall 124 of lid 104 at a second hinge line 154. The connector 150 can swivel about the hinge lines 152 and 154.

Moreover, in the embodiment, the distance between the first hinge line 152 and the second hinge line 154 is greater than the distance between the second hinge line 154 and the hinge line 122 of lid 104, e.g. by an amount of about 0.7 mm.

When the lid 104 is in its closed state, see Figure 5(a), a user can place the package 100 in the palm of one hand, touch the front wall 4 of the enclosure 2 through the cutout 120 in the outer shell 102 with the thumb and move the thumb upwards. In this way, the user slides the enclosure 2 from its retracted position upwards until it achieves its fully advanced position. During the movement of the enclosure 2, the connector 150 opens the lid 104 by swivelling it about the hinge line 122. Since during all times of this movement, the hinge lines 122, 152 and 154 form a triangle in the plane of Figure 6, the swivel movement of the lid 4 is well-defined.

Initially, when lid 104 is closed, the ratio of the distance between the first hinge line 152 of the connector 150 and the hinge line 122 of the lid 104 to the distance between the hinge line 122 of the lid 104 and the second hinge line 154 of the connector 150 is about 0.78, in the embodiment. This implies that, on the one hand, the lid 104 experiences a sufficient torque during the initial moments of the opening movement, whereas, on the other hand, the upper edge of the enclosure 2, i.e. the first hinge line 152, is not located too much below the hinge line 122, i.e. the connector mechanism does not waste much space in top of the enclosure 2 when the enclosure 2 assumes its retracted position.

When the user moves the thumb downwards, the enclosure 2 is shifted back to its retracted position, and the connector 150 pulls the lid 104 down to its closed state.

Figure 7 illustrates a blank 160 of the outer shell 102. In the embodiment, the blank 160 is made from cardboard of a usual thickness, e.g. in the weight range from 180 g/m² to 290 g/m². Other blank materials are conceivable as well, e.g. laminated cardboard or plastic materials.

In Figure 7, the front wall 110, the rear wall 112, and the bottom wall 116 of the outer shell 102 are indicated by their reference numerals. One of the two lateral walls (114 in Figure 5) comprises an outer layer 162 which, in the folded and assembled state, is glued to an inner layer 163, the other one an outer layer 164 glued to an inner layer 165.

Gluing tabs are designated by reference numeral 168 and any cut-through lines by reference numeral 169. The dashed lines are usual fold lines (creasing lines). The shaded areas are gluing areas.

In the area of the cutout (120 in Figure 5), four tabs 170 are provided which are folded back during the assemblage of the package and can be glued to the inner side of the front wall 110 in order to form smooth and well-appearing edges of the cutout. Similarly, a reinforcement tab 172 is folded back during assemblage of the outer shell in order to strengthen the outer shell and form a well-appearing upper edge of the front wall 110.

Figure 7 also illustrates how the lid 104 including its top wall 124 and the bevelled edge walls 134 and 136 is formed from the blank 160. The edge walls 134 and 136 are folded about their respective fold lines and are fixed to the lower side of top wall 124 by means of respective gluing tabs 168 and a gluing part 174, respectively.

The connector 150 including its first hinge line 152 and its second hinge line 154 extends from gluing part 174. The connector 150 is joined with the enclosure 2 by means of parts 175, which are folded upon its other and glued together to form a combined part 175.

The individual steps for assembling the outer shell 102 from blank 160 are evident to a person skilled in the art. Preferably, any glue is applied in the form of spots.

After assemblage of the outer shell 102 and lid 104, the sealed enclosure 2 is inserted into the outer shell 102, and the combined part 175 is glued to the outer face of the rear wall 5 of the enclosure 2 so that the first hinge line 152 is located at or approximately at the upper edge of rear wall 5. The combined part 175 also stiffens the enclosure 2.

Figure 8 shows a blank 180 of an inner frame made 182 of cardboard, which may be folded and inserted into the enclosure 2 before the enclosure 2 is sealed. In the enclosure 2, the inner frame 182 is located between the charge of cigarettes 30 and the flexible barrier sheet material forming the walls 4, 5, 6, 7, 8, and 9 of the enclosure. Thus, this inner frame 182 does not qualify as an inner shell of the package 100. The inner frame 182 stiffens the enclosure 2, which may become important after a part of the cigarettes 30 has been removed. In particular, the front wall 4 of the enclosure 2 is significantly reinforced so that it is able to withstand the pressure exerted by the user's thumb through the cutout 120 when the enclosure 2 is moved with respect to the outer shell 102.

In detail, the blank 180 comprises a front panel 184, two lateral panels 186, a bottom panel 188, two flaps 190, and two reinforcement panels 192, 193. In Figure 8, cut lines are drawn as bold lines, and fold lines are drawn as dash-dotted lines. The reinforcement panels 192, 193 are folded upon each other and upon the front panel 184, thus forming a triple-layer front wall of the inner frame 182, which results in the desired reinforcement. Optionally, the reinforcement panels 192, 193 and the front panel 184 are glued together. The flaps 190 may be glued to the bottom panel 188.

## Claims

1. Package of tobacco-related articles, comprising
- a sealed enclosure (2; 40; 50; 52; 54) comprising flexible barrier sheet material wrapping a charge of tobacco-related articles (30) and forming a front wall (4), a rear wall (5), two lateral walls (6, 7), a top wall (8) and a bottom wall (9), the front wall (4) having a larger area than the top wall (8), wherein an access opening (12) extending over part of the top wall (8) and part of the front wall (4) is covered by a re-sealable flap (20) which is foldable about a hinge line (14) to permit access to the interior of the enclosure (2), and
- an outer shell (102),
- wherein, in a closing position, the enclosure (2), without being inserted into an inner shell, is at least partially surrounded by the outer shell (102) so that the outer shell (102) at least partially covers the access opening (12), and wherein the enclosure (2) is slidably moveable with respect to the outer shell (102) from the closing position to an access position, in which the re-sealable flap (20) is accessable to be folded for permitting access to the interior of the enclosure (2).

2. Package according to claim 1, **characterised in that** the hinge line (14) of the flap (20) is located at the front wall (4) of the enclosure (2; 40).

3. Package according to claim 1, **characterised in that** the hinge line of the flap is located at the top wall of the enclosure (50; 52; 54).

4. Package according to any one of claims 1 to 3, **characterised in that** the front wall (4) of the enclosure (2; 54) has a length extending from a lower edge to an upper edge, the bottom wall (9) of the enclosure (2; 54) being connected to the lower edge and the top wall (8) of the enclosure (2; 54) being connected to the upper edge, wherein the access opening (12) has an extension on the front wall (4) of the enclosure (2; 54), starting from the upper edge and measured towards the lower edge, of at most 40% of the length of the front wall (4).

5. Package according to any one of claims 1 to 3, **characterised in that** the front wall of the enclosure (40; 50) has a length extending from a lower edge to an upper edge, the bottom wall of the enclosure (40; 50) being connected to the lower edge and the top wall of the enclosure (40; 50) being connected to the upper edge, wherein the access opening has an extension on the front wall of the enclosure (40; 50), starting from the upper edge and measured towards the lower edge, of at least 65% of the length of the front wall.

6. Package according to any one of claims 1 to 5, **characterised in that** the flap (20) comprises a gripping tab (26; 44; 56) located in an area remote from the hinge line (14) of the flap (20).

7. Package according to any one of claims 1 to 6, **characterised in that** the flap (20) comprises a layer (16) which includes barrier sheet material cut from the barrier sheet material forming the front wall (4) and the top wall (8) of the enclosure (2; 40; 50; 52; 54), said layer (16) being covered by a label (18; 42; 51; 53; 55) having adhesive edge zones (22) extending beyond the cut edges of said layer (16) and being adapted to seal the flap (20) when the access opening (12) is covered.

8. Package according to claim 7, **characterised in that** the label (18; 42; 51; 53; 55), in an area opposite to the hinge line (14) of the flap (20) and beyond said barrier sheet material layer (16) of the flap (20), is folded back about a fold line (24) and forms a gripping tab (26; 44; 56), which preferably is non-adhesive.

9. Package according to claim 7 or 8, **characterised in that** the portion of the label (42; 51) extending at the front wall of the enclosure (40; 50) has a length of at least 65% of the length of the front wall.

10. Package according to any one of claims 1 to 9, **characterised in that** an inner frame (182), preferably comprising cardboard, is provided between the charge of tobacco-related articles (30) and the enclosure (2), the inner frame (182) not obstructing the area of the access opening (12).

11. Package according to any one of claims 1 to 10, **characterised by** further comprising a lid (104) and a connector (150) engaging the lid (104),
- wherein the outer shell (102) comprises a front wall (110), a rear wall (112), two lateral walls (114) opposite to each other connecting the front wall (110) and the rear wall (112), as well as a top side (118),
- wherein the lid (104) is adapted to close the top side (118) of the outer shell (102) when in a closed state, the lid (104) being swivelably connected to the rear wall (112) of the outer shell (102) at a hinge line (122) and being swivelable about said hinge line (122) for transfer from the closed state to an opened state,
- wherein the enclosure (2) is slidably mounted in the outer shell (102) and is moveable from a retracted position to an advanced position, which enables access to the flap (20), the access opening (12) and the tobacco-related articles (30),
- wherein a cutout (120) is provided in at least one wall of the outer shell (102), selected out of the front wall (110), the rear wall (112) or the two lateral walls (114), which cutout (120) is adapted to expose part of the enclosure (2) and to enable transmitting a force onto the enclosure (2) for moving the enclosure (2),
- wherein the connector (150) is arranged between a part at the enclosure (2) and the lid (104) and engages the lid (104) at a distance from the hinge line (122) of the lid smaller than the dimension of the lid (104) in a direction perpendicular to the hinge line (122) of the lid (104) and is adapted to push the lid (104) into its opened state when the enclosure (2) is moved into its advanced position and to pull the lid (104) into its closed state when the enclosure (2) is moved into its retracted position.

12. Package according to claim 11, **characterised**
- **in that** the lid (104) comprises a top wall (124) having a front edge (126), a rear edge (128), two lateral edges (130) and a bottom side (132) and adapted to close the top side (118) of the outer shell (102) when the lid (104) is in its closed state, the hinge line (122) of the lid (104) being located at the rear edge (128) of the top wall (124), and
- **in that** the connector (150) extends from an upper area at the rear wall (5) of the enclosure (2), having a first hinge line (152) at said area, and wherein the connector (150) has a second hinge line (154) at the bottom side (132) of the top wall (124).

13. Package according to claim 12, **characterised in that**, in the closed state of the lid (104), the ratio of the distance between the first hinge line (152) of the connector (150) and the hinge line (122) of the lid (104) to the distance between the hinge line (122) of the lid (104) and the second hinge line (154) of the connector (150) is in the range of from 0.5 to 1.0.

14. Package according to any one of claims 11 to 13, **characterised in that** the connector (150) emerges from a reinforcement element (175) arranged at the outer face of the rear wall (5) of the enclosure (2).

15. Package according to any one of claims 1 to 14, **characterised in that** the flap (20) comprises a self-sticking area comprising a sticking means facing outwardly.
